# EUROPEAN PATENT APPLICATION

(11) **EP 0 697 757 A1**
(43) Date of publication of application: **21.02.1996**
(21) Application number: 94630054.8
(22) Date of filing: 15.09.1994
(51) Int. Cl.: H02H 9/04

(54) **Electrostatic discharge protection circuit for an integrated circuit device**

(30) Priority: 16.08.1994 US 291132
(71) Applicant: UNITED MEMORIES, INC., Colorado Springs, CO 80919 (US); Nippon Steel Semiconductor Corp., Tateyama-shi, Chiba 294 (JP)
(72) Inventor: Butler, Douglas B., Colorado Springs, Colorado 80919 (US); Faue, Jon A., Colorado Springs, Colorado 80908 (US)
(74) Representative: Schmitz, Jean-Marie

(57) **Abstract**

An ESD protection circuit for an integrated circuit is formed by a shunt transistor (62) selectively coupling the V_{CC} and V_{SS} input pins, or other relatively high capacitance IC circuit nodes. A capacitor (70) couples the V_{CC} pin to the transistor gate to turn it on and thereby shunt the ESD current through the transistor to V_{SS}. A resistor (72) couples the V_{SS} pin to the transistor gate to cause the transistor to turn off after the current has been discharged therethrough. The values for the capacitor and resistor are chosen to provide a resultant time constant which is long relative to a Human Body Model ESD test circuit and short relative to typical voltage rise times encountered at the protected circuit nodes.

## Description

### Background of the Invention

The present invention relates, in general, to an electrostatic discharge ("ESD") protection circuit for an integrated circuit ("IC") device. More particularly, the present invention relates to a readily implemented ESD protection circuit for an integrated circuit device which utilizes a single transistor coupled between relatively high capacitance circuit nodes, such as the external V_{CC} and V_{SS} pins.

By their very nature, semiconductor devices, and especially integrated circuits, are susceptible to damage resulting from ESD which can result in the sudden application of thousands of volts of static electricity to the device pins. Should a static discharge of sufficient magnitude occur (on the order of 2kV or more) degradation or damage to the device will generally result. Although integrated circuits with metal oxide semiconductor field effect transistors ("MOSFETs") and capacitors utilizing a thin gate oxide or shallow junctions are especially susceptible to damage from ESD, even bipolar circuits may be damaged by sufficiently high static discharges resulting in altered electrical properties and diminished reliability.

Because it has been found that semiconductor handling equipment and personnel can produce static potentials in excess of 10kV in a low humidity environment, various well known measures have been implemented in the manufacture, handling and shipping of integrated circuit and semiconductor devices to reduce the occurrence of potentially damaging static charges.

With respect to the actual circuitry of the integrated circuit devices themselves, one method which is currently employed to provide ESD protection is to incorporate an input protection network or other output protection circuit comprising a number of diodes coupled to the device input/output ("I/O") pins integrated monolithically with the integrated circuit. The function of such diodes is to provide a breakdown mechanism lower than that of any other circuit elements to which they are electrically connected. However, such breakdown mechanisms have become increasingly more difficult to implement as thinner gate oxides and shallower junctions are utilized in constructing integrated circuits and this technique inevitably leads to poor ESD protection on the V_{CC} input pin or results in other circuit design compromises in order to increase the breakdown resistance to ESD. Using this technique, the protection of circuitry coupled to the V_{CC} and V_{SS} pins is especially problematic due to the fact that they are coupled to virtually all of the IC's internal circuitry.

As a consequence, it is generally acknowledged that there has heretofore been no completely satisfactory device structure capable of providing adequate input and output protection to conventional integrated circuits, and particularly the high capacitance nodes such as the V_{CC} and V_{SS} voltage input pins. Moreover, with respect to linear circuits in particular, such conventional protection networks may actually interfere with normal circuit operation.

### Summary of the Invention

The present invention relates to a readily implemented integrated ESD protection circuit of especial utility with respect to the high capacitance nodes of an integrated circuit, and in particular, the V_{CC} and V_{SS} or other IC voltage input pins. The ESD protection circuit of the present invention incorporates a single transistor or switching device coupling, for example, the integrated circuit V_{CC} and V_{SS} input pins. As the level of an applied V_{CC} rises, a capacitor coupled between the V_{CC} input pin and the control terminal of the transistor causes the transistor to turn "on" thereby limiting the V_{CC} voltage by shunting it to V_{SS}. A resistor coupled between the V_{SS} input pin and the transistor control terminal causes the gate of the transistor to be pulled to ground thereby turning the transistor "off". The values for the capacitor and resistor are chosen such that the resultant time constant is long relative to a Human Body Model ESD test circuit and short relative to typical voltage rise times encountered at the protected circuit nodes. As a result, the ESD current is discharged through the transistor before the resistor can turn it "off" and the transistor is held in that state during normal operation and throughout normal fluctuations in supply voltage.

Broadly disclosed herein is an integrated circuit device including first and second input terminals thereof, the integrated circuit including an electrostatic discharge protection circuit. The electrostatic discharge protection circuit includes a switching device having first, second and control terminals thereof with the first and second terminals being coupled respectively to the first and second input terminals of the integrated circuit device. A capacitive element couples the first and control terminals of the switching device and a resistive element couples the second and control terminals of the switching device.

Also disclosed herein is an electrostatic discharge protection circuit for an integrated circuit which includes first and second external terminals thereof. The electrostatic protection circuit includes a field effect transistor having source, drain and gate terminals thereof with the source terminal being coupled to the first external terminal and the drain terminal being coupled to the second external terminal. A capacitor couples the gate terminal to the source terminal and a resistor couples the gate terminal to the drain terminal.

Further disclosed herein is an integrated circuit device including at least first and second circuit nodes thereof with the integrated circuit device including an electrostatic discharge protection circuit. The electrostatic discharge protection circuit includes a switchable shunting means having a first state thereof for operatively coupling the first circuit node to the second circuit node in response to a control signal supplied to a control terminal of the shunting means. The switchable shunting means also includes a second state thereof for operatively isolating the first circuit node from the second circuit node in an absence of the control signal. Also included are means coupled to the first circuit node for supplying the control signal to the control terminal of the shunting means operative to cause the shunting means to enter the first state thereof as well as means coupled to the second circuit node for moving the control signal from the control terminal of the switching means operative to cause the shunting means to enter the second state thereof.

### Brief Description of the Drawings

The aforementioned and other features and objects of the present invention and the manner of attaining them will become more apparent and the invention itself will be best understood by reference to the following description of a preferred embodiment taken in conjunction with the accompanying drawings, wherein:
Fig. 1 is a simplified representational view of a Human Body Model ESD test configuration for an integrated circuit, for example a memory device, illustrating the application of a test voltage stored in a capacitor which is then discharged into a test pin through a resistor with the IC's V_{SS} pin connected to circuit ground;
Fig. 2A is a schematic representation of a conventional input protection network for an input pin of an integrated circuit comprising a number of resistors and diodes;
Fig. 2B is a schematic representation of a conventional output protection circuit for an output pin of an integrated circuit comprising a number of diodes;
Fig. 2C is a schematic representation of a conventional overvoltage protection circuit for the voltage input pins V_{CC} and V_{SS} of an integrated circuit comprising a number of zener diodes; and
Fig. 3 is a schematic diagram of an electrostatic discharge protection circuit for an integrated circuit in accordance with the present invention.

### Description of a Preferred Embodiment

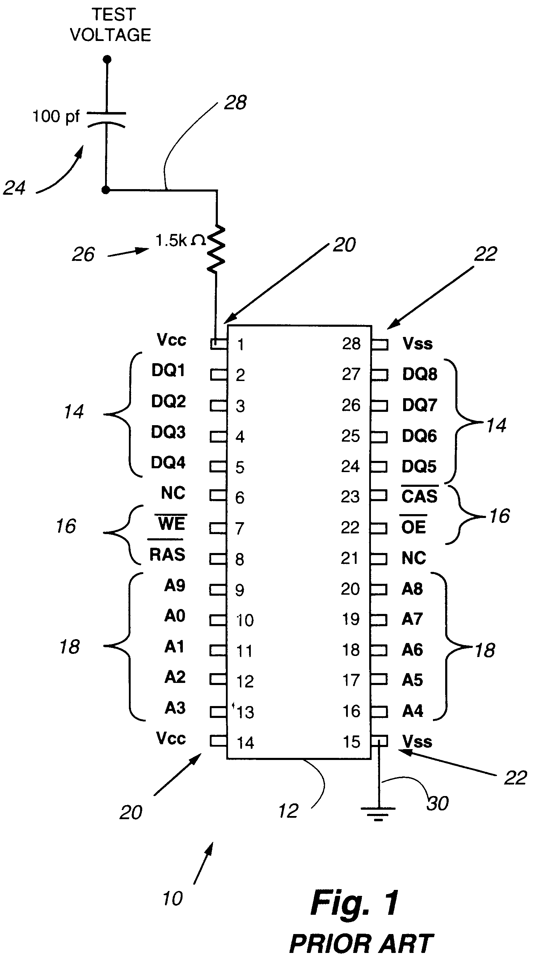

With reference now to Fig. 1, a prior art Human Body Model ESD test configuration 10 is shown in conjunction with an exemplary integrated circuit 12. In the example shown, the integrated circuit 12 comprises a conventional integrated circuit memory device incorporating a number of input/output ("I/O") pins 14 designated, for example, as data input/output pins DQ1-DQ8. Integrated circuit 12 also incorporates a number of control input pins 16 corresponding to active low: write enable ("/WE"), row address select ("/RAS"), column address select ("/CAS") and output enable ("/OE").

As illustrated, integrated circuit 12 also includes a number of input pins 18 shown as corresponding to the address pins, or terminals A0-A9, for coupling to an address bus utilized in accessing particular locations within the memory array of the integrated circuit 12. A number of voltage input pins for supplying power to integrated circuit 12 are indicated as V_{CC} and V_{SS} pins 20,22 respectively and more than one of each may be provided to help ensure low noise/high speed operation. In a typical integrated circuit, the voltage applied to V_{CC} pin 20 may correspond to a power level of approximately +5 volts while the V_{SS} pin 22 will be connected to circuit ground 30 as shown.

In conducting the Human Body Model ESD test shown in the test configuration 10 of Fig. 1, a 100 picoFarad ("pF") capacitor 24 is charged to a test voltage and then discharged into a test pin of the integrated circuit 12, for example the V_{CC} pin 20, through a 1.5Kohm resistor 26 as shown by means of a test line 28 connected thereto. Normal supply voltage fluctuations are not nearly so instantaneous and normally occur over a period of hundreds of microseconds.

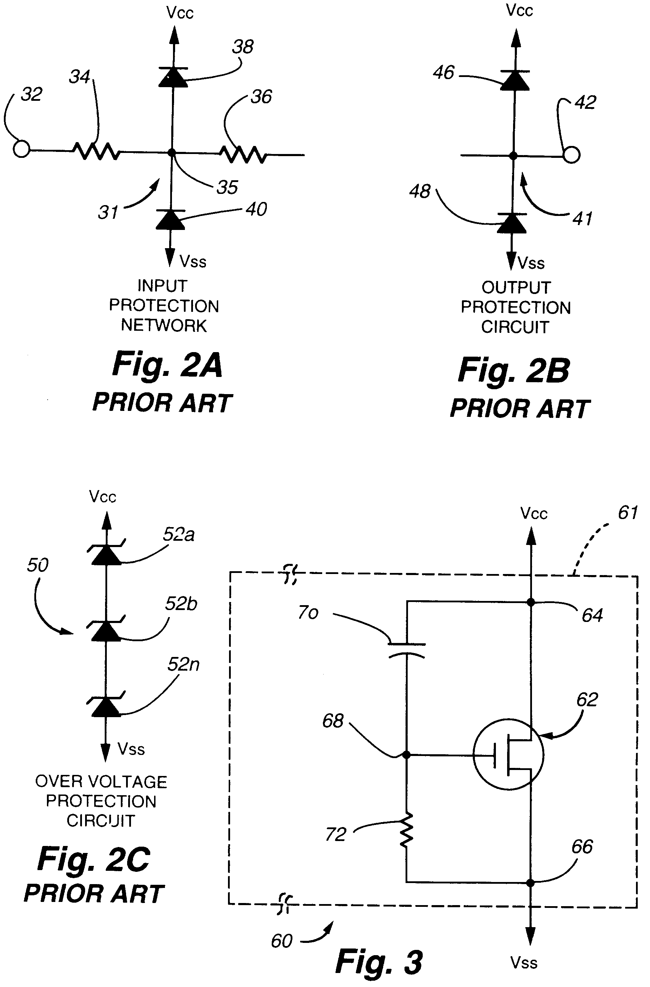

With reference additionally now to Fig. 2A, an input protection network 31 is shown for utilization in conjunction with I/O pins 14 and/or input pins 18 of the exemplary integrated circuit 12 shown in Fig. 1. Input protection network 31 is integrated as part of the semiconductor die comprising the integrated circuit elements of integrated circuit 12 and is coupled to an input pin 32 as shown. Input protection network 31 may typically comprise a pair of resistors 34,36 in conjunction with diodes 38,40. In the typical circuit illustrated, diode 38 has its cathode coupled to the V_{CC} pin of the integrated circuit 12 and its anode coupled to the cathode of diode 40 forming a node 35. In turn, diode 40 has its anode connected to the V_{SS} pin of the integrated circuit 12. Resistor 34 couples node 35 to input pin 32 while resistor 36 couples node 35 to the related input circuitry of the integrated circuit 12.

With reference additionally now to Fig. 2B, a conventional output protection circuit 41 for the output pins of an integrated circuit 12 as shown in Fig. 1 is illustrated. The output protection circuit 41 comprises a pair of diodes 46,48 having a common node therebetween connected to output pin 42. Output pin 42 is also coupled to the output circuitry of a typical integrated circuit 12 as shown in Fig. 1. Diode 46 has its cathode coupled to the V_{CC} pin of the integrated circuit and its anode coupled to the cathode of diode 48 which in turn has its anode coupled to the V_{SS} pin.

With respect to the input protection network 31 of Fig. 2A and the output protection circuit 41 of Fig. 2B, it should be noted that the address input pins 18 and input/output pins 14 of a typical memory integrated circuit are connected to relatively few circuits internal to the integrated circuit 12. Therefore, a structure as previously described which is intended to break down before any of these circuits is added in order to protect them.

With reference additionally now to Fig. 2C, an over voltage protection circuit 50 for coupling between the V_{CC} pin 20 and V_{SS} pin 22 of the integrated circuit 12 of Fig. 1 is shown. Over voltage protection circuit 50 typically comprises a number of series connected zener diodes herein designated as 52a, 52b through 52n. The zener diodes 52 are coupled in series such that the cathode of the first zener diode 52a is connected to the V_{CC} pin 20 and the anode of the last of the series of zener diodes 52n is coupled to the V_{SS} pin 22.

Unlike the address input pins 18 and I/O pins 14 of a typical memory integrated circuit 12, the V_{CC} pin 20 is connected to many circuit elements on the integrated circuit die and some, or many, of these elements may breakdown before the over voltage protection circuit 50 can provide the desired protection. Should this occur, the circuit elements integrated on the integrated circuit 12 die may be damaged as they are not designed to carry the relatively large currents which result from an applied ESD. With respect to the various protection schemes illustrated in Figs. 2A through 2C, protection against ESD is dependent upon breakdown mechanisms which are required to be lower than that of the other circuit elements of the integrated circuit itself. Such techniques lead to inherently poor ESD protection on the V_{CC} pin 20 or other circuit design compromises necessary to increase breakdown voltage.

With reference now to Fig. 3, an ESD protection circuit 60 in accordance with the present invention is shown. ESD protection circuit 60 may be monolithically integrated with the other circuit elements of an integrated circuit 61, the outline of which is shown in phantom.

ESD protection circuit 60 comprises, in pertinent part, a transistor 62, (shown, for example, as an n-channel MOSFET), which functions as a switching or shunting device between terminal, (or node), 64 coupled to V_{CC} and terminal, (or node), 66 coupled to V_{SS}. In a preferred embodiment, transistor 62 may comprise a device having a channel width of 2,000 microns and a channel length of 1.2 microns. The gate of transistor 62 is coupled to a node 68 as shown.

ESD protection circuit 60 also comprises a capacitor 70 coupling terminal 64 to node 68. In a preferred embodiment, capacitor 70 may be a conventional integrated circuit polysilicon/silicon dioxide/polysilicon capacitor having a desired capacitance of approximately 25pF. ESD protection circuit 60 further comprises a resistor 72 coupling terminal 66 to node 68. In a preferred embodiment, resistor 72 may be a conventional integrated circuit polysilicon element having a preferred resistance of approximately 20Kohms.

In operation, as the voltage level on the V_{CC} pin rises rapidly, (for example, due to an applied ESD), capacitor 70 couples the gate of transistor 62 at node 68 "high", thereby causing transistor 62 to turn "on". This, in turn, serves to limit the V_{CC} voltage by shunting it to V_{SS}. The resistor 72 then causes the gate of the transistor 62 at node 68 to be pulled to circuit ground at pin V_{SS} thereby turning the transistor 62 "off" after the ESD current is discharged through the transistor 62.

In establishing the values of capacitor 70, resistor 72 and the conductance of transistor 62, the values should be chosen such that the RC time constant of the capacitor 70 and resistor 72 is larger than the RC time constant of the 100 picoFarad capacitor 24 and 1.5Kohm resistor 26 of the test configuration 10 illustrated in Fig. 1. Moreover, the RC time constant of the capacitor 70 and resistor 72 of the ESD protection circuit 60 must be short compared to the rise times of V_{CC} in actual system applications wherein the supply voltage fluctuations occur over hundreds of microseconds. The conductance of transistor 62 is chosen such that it is high enough to keep V_{CC} below the breakdown voltage of any circuits located on the integrated circuit die.

While there have been described above the principles of the present invention in conjunction with specific circuitry, it should be noted that the foregoing description is made only by way of example and not as a limitation to the scope of the invention. In particular, while the ESD protection circuit of the present invention has been shown in conjunction with providing ESD protection to the V_{SS} and V_{CC} voltage pins of an integrated circuit, the principles of the present invention are also applicable to any relatively high capacitance circuit nodes.

## Claims

1. An electrostatic discharge protection circuit including at least first and second circuit nodes, characterized by switchable shunting means having a first state thereof for operatively coupling said first circuit node to said second circuit node in response to a control signal supplied to a control terminal of said shunting means and a second state thereof for operatively isolating said first circuit node from said second circuit node in an absence of said control signal; means coupled to said first circuit node for supplying said control signal to said control terminal of said shunting means operative to cause said shunting means to enter said first state thereof; and means coupled to said second circuit node for removing said control signal from said control terminal of said switching means operative to cause said shunting means to enter said second state thereof.

2. The circuit of claim 1 wherein said switchable shunting means comprises a semiconductor switching device.

3. The circuit of claim 2 wherein said semiconductor switching device comprises a transistor.

4. The circuit of claim 3 wherein said transistor comprises a field effect transistor.

5. The circuit of claim 4 wherein said field effect transistor comprises an n-channel MOSFET.

6. The circuit of claims 1 or 2 wherein said control signal supplying means comprises a capacitive element.

7. The circuit of claim 6 wherein said capacitive element has a capacitance of substantially 25 pF.

8. The circuit of claims 1 or 2 wherein said control signal removing means comprises a resistive element.

9. The circuit of claim 8 wherein said resistive element has a resistance of substantially 20Kohms.

10. The circuit of any preceding claim wherein said control signal supplying means and said control signal removing means provide a time constant longer than that of a Human Body Model ESD test setup.

11. The circuit of claim 1 wherein said control signal supplying means and said control signal removing means provide a time constant shorter than that of the rise time to V_{SS} of a voltage which may be applied to said first circuit node during normal device operation.

12. The circuit of claims 1 or 2 wherein said shunting means has a conductance between said first and second circuit nodes sufficient to limit the voltage which may be applied to said first circuit node below the breakdown voltage of other elements of said integrated circuit.

13. The circuit of claim 1 wherein said first circuit node comprises a V_{CC} input pin.

14. The circuit of claim 1 wherein said second circuit node comprises a V_{SS} input pin.

15. The circuit of claim 1 wherein said switchable shunting means is a switching device having a first terminal, a second terminal and a control terminal, said first and second terminals being coupled to said first and second circuit nodes respectively; said means for supplying said control signal is a capacitive element coupling said first terminal and said control terminal of said switching device; and said means for removing said control signal is a resistive element coupling said second terminal and said control terminal of said switching device.

16. An integrated circuit device including an electrostatic discharge protection circuit according to any of claims 1 to 15, said integrated circuit device having the at least first and second circuit nodes, characterized in that said switchable shunting means is as switching device having a first terminal, a second terminal and a control terminal, said first and second terminals being coupled to said first and second circuit nodes respectively; said means for supplying said control signal is a capacitive element coupling said first terminal and said control terminal of said switching device; and said means for removing said control signal is a resistive element coupling said second terminal and said control terminal of said switching device.
